# EUROPÄISCHE PATENTSCHRIFT

(11) **EP 2 934 841 B1**
(45) Veröffentlichungstag und Bekanntmachung des Hinweises auf die Patenterteilung: **17.01.2018**
(21) Anmeldenummer: 13795271.9
(22) Anmeldetag: 26.11.2013
(51) Int. Cl.: B29B 15/10

(54) **VERFAHREN FÜR DIE VORBEREITUNG EINES HALBZEUGS AUS FASERMATERIAL AUF EIN NASSPRESSVERFAHREN**
PROCESS FOR THE PREPARATION OF A SEMIFINISHED PRODUCT MADE OF FIBRE MATERIAL PRIOR TO A WET PRESSING PROCESS
PROCÉDÉ DE PRÉPARATION D'UN SEMI-FINI EN MATÉRIAU DE FIBRES EN VUE D'UN PROCÉDÉ DE PRESSAGE HUMIDE

(30) Priorität: 20.12.2012 DE 102012223871
(43) Veröffentlichungstag der Anmeldung: 28.10.2015
(73) Patentinhaber: Bayerische Motoren Werke Aktiengesellschaft, 80809 München (DE)
(72) Erfinder: SCHINDLBECK, Martin, 84088 Neufahrn (DE)
(86) Internationale Anmeldenummer: PCT/EP2013/074701
(87) Internationale Veröffentlichungsnummer: WO 2014/095258

(56) Entgegenhaltungen:
- WO-A1-01/32382
- DE-A1-102011 056 703
- US-A- 2 417 851

## Beschreibung

Die vorliegende betrifft ein Verfahren für die Vorbereitung eines Halbzeugs aus Fasermaterial auf ein Nasspressverfahren sowie eine Vorbereitungsvorrichtung für die Vorbereitung eines Halbzeugs aus Fasermaterial auf ein Nasspressverfahren.

Verfahren für die Vorbereitung von Halbzeugen aus Fasermaterial auf Nasspressverfahren sind grundsätzlich bekannt. So werden auf Vorbereitungsflächen in Tischform sogenannte Stacks ausgelegt, die als mehrlagiges Fasermaterial ausgebildet sind. Anschließend wird von der Oberseite das fließfähige Matrixmaterial als Matrixwerkstoff eingebracht. Nachdem das Fasermaterial des Halbzeugs im Wesentlichen vollständig mit dem Matrixwerkstoff durchzogen ist bzw. dieser eingedrungen ist, kann anschließend das getränkte Halbzeug in das Nasspresswerkzeug eingelegt werden. Dort wird das Nasspressverfahren durchgeführt. Um jedoch auch besonders dicke Halbzeuge aus einer Vielzahl von Lagen von Fasermaterial ausreichend tränken zu können, reicht es nicht aus, dass ausschließlich von der Oberseite der Matrixwerkstoff eingebracht wird. Vielmehr muss zur ausreichenden Durchtränkung des Fasermaterials bei mehrlagigen Faserschichten des Halbzeugs eine Aufteilung des Halbzeugs durchgeführt werden. So sind beispielsweise maximal ca. drei- bis fünflagige Halbzeuge möglich, so dass für Halbzeuge mit größeren Dicken dementsprechend in sandwichartiger Weise einzelne Stackhalbzeuge aufeinandergelegt werden müssen. Zwischen die einzelnen Kontaktschichten der einzelnen Stackhalbzeuge wird der Matrixwerkstoff eingebracht und kann somit innenliegend in die jeweilige Stackhalbzeuge eindringen.

Nachteilhaft bei bekannten Verfahren ist der hohe Aufwand für die Herstellung der einzelnen Stackhalbzeuge. So muss für ein gesamtes Strukturbauteil z.B. eine Vielzahl einzelner Stackhalbzeuge und nicht mehr nur ein einziges Halbzeug hergestellt werden. Die Halbzeuge werden häufig von Gewebe- oder Fließrollen aus Fasermaterial abgerollt, wobei von einer Vielzahl von Rollen unterschiedliche Schichten zusammengelegt werden. Anschließend erfolgt ein Schneidevorgang, um die Grundgeometrie des Halbzeugs bereits durch den Schnitt festzulegen. Wird eine Mehrzahl von zwei oder sogar noch mehr verschiedenen Stackhalbzeugen notwendig, um in sandwichartiger Weise den Matrixwerkstoff einzubringen, so verdoppelt sich auch zumindest der Schneidevorgang, der Transportvorgang und sämtliche weiteren Schritte ausgehend von der Herstellung des Halbzeugs bis zum Tränken mit dem Matrixwerkstoff. Werden sogar drei oder noch mehr einzelne Stackhalbzeuge benötigt, so verdreifacht oder vervielfacht sich dementsprechend der beschriebene Aufwand. Dies ist insbesondere hinsichtlich der notwendigen Zeit für die Herstellung kritisch. Auch die Kosten steigen stark an.

Weitere Verfahren für die Vorbereitung von Halbzeugen aus Fasermaterial auf Nasspressverfahren sind aus der US 2 417 851 A sowie der WO 01/32382 A1 bekannt.

Es ist Aufgabe der vorliegenden Erfindung, die voranstehend beschriebenen Nachteile zumindest teilweise zu beheben. Insbesondere ist es Aufgabe der vorliegenden Erfindung, ein Verfahren für die Vorbereitung eines Halbzeugs aus Fasermaterial für ein Nasspressverfahren sowie eine entsprechende Vorbereitungsvorrichtung für eine solche Vorbereitung zur Verfügung zu stellen, welche in einfacher und kostengünstiger Weise auch bei dicken Halbzeugen eine schnelle Einbringung des fließfähigen Matrixwerkstoffs erlauben.

Voranstehende Aufgabe wird gelöst durch ein Verfahren mit den Merkmalen des Anspruchs 1 und eine Vorbereitungsvorrichtung mit den Merkmalen des Anspruchs 5. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorbereitungsvorrichtung und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient der Vorbereitung eines Halbzeugs aus Fasermaterial mit einer Oberseite und einer Unterseite auf ein Nasspressverfahren. Ein solches erfindungsgemäßes Verfahren weist die folgenden Schritte auf:
- Anordnen eines Halbzeugs aus Fasermaterial mit der Unterseite auf einer Vorbereitungsfläche mit einer Vielzahl von Saugöffnungen,
- Anlegen eines Unterdrucks an die Unterseite des Halbzeugs über die Saugöffnungen,
- Einbringen eines fließfähigen Matrixwerkstoffs über die Oberseite des Halbzeugs.

Bei einem erfindungsgemäßen Verfahren erfolgt also die Einbringung des Matrixwerkstoffs in fließfähiger Weise ausschließlich über die Oberseite des Halbzeugs. Insofern kann auf eine sandwichartige Einbringung des Matrixwerkstoffs verzichtet werden. Um unabhängig von der Dicke des Halbzeugs, also unabhängig von der Anzahl der Lagen an Fasermaterial für das Halbzeug, eine ausreichende Durchdringung mit fließfähigem Matrixwerkstoff zu gewährleisten, erfolgt erfindungsgemäß eine Unterstützung. Diese Unterstützung wird durch den Unterdruck an der Unterseite des Halbzeugs gewährleistet.

Wird bei einem erfindungsgemäßen Verfahren das Halbzeug auf der Vorbereitungsfläche mit der Vielzahl der Saugöffnungen angeordnet, so kann anschließend ein Unterdruck an der Unterseite angelegt werden. Dieser Unterdruck wird z.B. mithilfe eines Kompressors erzeugt. Mithilfe des Unterdrucks entsteht eine Saugwirkung von der Oberseite des Halbzeugs in Richtung der Unterseite. Wird nun fließfähiger Matrixwerkstoff auf der Oberseite des Halbzeugs aufgebracht, so wirkt dieser Unterdruck zusätzlich zu den wirkenden Kapillarkräften und zusätzlich zur wirkenden Schwerkraft unterstützend für das Einbringen des fließfähigen Matrixwerkstoffs. Mit anderen Worten bildet sich eine Fluidfront für den Matrixwerkstoff aus, welche neben den bereits erwähnten Effekten auch durch den Unterdruck in Dickenrichtung durch das Halbzeug hindurchgezogen wird.

Selbstverständlich kann in den Saugöffnungen eine Sensorik vorgesehen sein, um das Einbringen von Matrixwerkstoff in diese Saugöffnungen zu vermeiden. Auch ist es möglich, dass bei einem erfindungsgemäßen Verfahren eine genaue Zeitsteuerung eingesetzt wird, um den Zeitpunkt der kompletten Durchdringung des Halbzeugs mit fließfähigem Matrixwerkstoff zu definieren. In einem letzten Fall könnte auf aufwendige Sensorik verzichtet werden.

Ausgehend von dem Vorbereitungsverfahren gemäß der vorliegenden Erfindung kann nun das getränkte Halbzeug, in bekannter Weise, in ein nachfolgendes Nasspresswerkzeug eingelegt werden. Der Nasspressschritt des Nasspressverfahrens wird dabei in üblicher und bekannter Weise durchgeführt.

Das Halbzeug ist im Sinne der vorliegenden Erfindung insbesondere ein mehrlagiges Bauteil, besonders bevorzugt mit relativ großer Dicke im Bereich von ca. 2 bis ca. 4 mm oder darüber. Als Unterdruck kommt insbesondere ein Vakuum im Bereich zwischen ca. -0,2 bar und ca. -0,6 bar in Frage. Dabei können selbstverständlich Kompressorvorrichtungen eingesetzt werden, welche über fluidkommunizierende Verbindung mit den Saugöffnungen den Unterdruck erzeugen können.

Das Halbzeug kann auch als Stack bezeichnet werden, je nachdem wie es genau aufgebaut ist. Die Herstellung des Halbzeugs kann in bekannter Weise, z.B. von Rollenvorlagen erfolgen. Dabei können Fließe oder Gewebe bzw. Gelege des Fasermaterials eingesetzt werden.

Durch ein erfindungsgemäßes Verfahren können insbesondere auch Halbzeuge mit komplexen Geometrien getränkt werden. Dabei sind unter komplexen Geometrien insbesondere dicke Bauteile und Bauteile mit steilen Bauteilkanten zu verstehen. Eine steile Bauteilkante ist dabei definiert durch den Seitenwinkel zur Horizontalen im jeweiligen Nasspresswerkzeug, welcher im Bereich zwischen ca. 50° und ca. 90° liegt.

Der Matrixwerkstoff wird nach dem Einbringen innerhalb des Nasspressverfahrens ausgehärtet. Als Matrixwerkstoff kann z.B. ein Harzwerkstoff, insbesondere ein Epoxidharz eingesetzt werden.

Ein erfindungsgemäßes Verfahren lässt sich dahingehend weiterbilden, dass auf der Vorbereitungsfläche eine Schablone angeordnet wird, welche abschnittsweise die Saugöffnungen abdeckt, insbesondere mit der geometrischen Form des Halbzeugs korrespondiert. Unter einer Schablone ist ein Element zu verstehen, welches auf die Vorbereitungsfläche aufgelegt wird. Die Korrespondenz mit der geometrischen Form des Halbzeugs ist z.B. als Umrahmen des Halbzeugs zu verstehen. Neben dem Umrahmen ist jedoch auch eine Überschneidung bzw. Überlappung mit dem Halbzeug denkbar. Die Schablone deckt die Saugöffnungen in einer Art und Weise ab, dass es zwei Möglichkeiten der Ausführung der Schablone gibt. Zum einen kann es sein, dass die Schablone fluiddicht ausgeführt ist, also die Saugöffnungen an dieser Stelle wirkungslos werden. Jedoch ist es auch möglich, dass die Schablone eigene Wechselsaugöffnungen aufweist, welche eine andere Verteilung aufweisen, als die Saugöffnungen. Damit wird die Saugleistung verändert, so dass eine Variation des Unterdrucks durchgeführt werden kann. Die gezielte Anlegung von Unterdruck in einzelnen Abschnitten des Halbzeugs wird dabei unterstützt. Als einfachste Lösung handelt es sich jedoch um eine fluiddichte Schablone, welche umrandend um das Halbzeug aufgelegt wird. Damit kann eine große Vorbereitungsfläche auch für kleine Halbzeuge eingesetzt werden, ohne dass eine Anpassung der Vorbereitungsfläche erfolgen muss. Auch ist es möglich eine Vielzahl von Halbzeugen gleichzeitig in erfindungsgemäßer Weise vorzubereiten.

Ein weiterer Vorteil wird erzielt, wenn bei einem erfindungsgemäßen Verfahren vor dem Anordnen des Halbzeugs auf der Vorbereitungsfläche ein an das Halbzeug angepasster Wechseleinsatz auf der Vorbereitungsfläche angeordnet wird. Unter einem Wechseleinsatz ist im Gegensatz zu einer Schablone ein Bauteil zu verstehen, welches in die Vorbereitungsfläche, z.B. in eine Vertiefung, eingesetzt wird. Der Wechseleinsatz kann ebenfalls sowohl fluiddicht ausgebildet sein, als auch eigene Wechselöffnungen aufweisen. Somit kann er in gleicher Weise eine Anpassung an die geometrische Form des Halbzeugs mit sich bringen, wie dies zur Schablone beschrieben worden ist. Auch ist es möglich, dass über unterschiedliche Wechselöffnungen einzelne Abschnitte des Halbzeugs in gezielterer Weise mit einem definierten Unterdruck beaufschlagt werden.

Vorteilhaft ist es darüber hinaus, wenn bei einem erfindungsgemäßen Verfahren das Halbzeug aus Fasermaterial als ein mehrlagiges Halbzeug, insbesondere mit mehr als 6 Lagen, ausgebildet ist. Dabei sind vorzugsweise Dicken im Bereich von ca. 2 mm bis ca. 4 mm vorgesehen. Je dicker das Halbzeug ausgebildet ist, umso größer ist der Vorteil eines erfindungsgemäßen Verfahrens, da ein kontinuierlicheres Einbringen des Matrixwerkstoffs von der Oberseite erfolgen kann. Jedoch bringt auch bei dünnen Halbzeugen ein erfindungsgemäßes Verfahren Vorteile mit sich, da insbesondere ein schnelleres Einbringen des Matrixwerkstoffs und damit eine Zeitersparnis erzielt werden kann.

Ein erfindungsgemäßes Verfahren lässt sich dahingehend weiterbilden, dass das Halbzeug aus Fasermaterial die Fasern zumindest abschnittsweise in einer der folgenden Formen aufweist:
- Fasergelege
- Fasergewebe

Auch Kombinationen der möglichen Formen der voranstehenden, nicht abschließenden Liste sind im Rahmen der vorliegenden Erfindung denkbar. Vorzugsweise sind die einzelnen Fasern, also das Fasergelege oder das Fasergewebe auf Rollenbahnen angeordnet, welche durch gemeinsames Abrollen übereinandergelegt und geschnitten werden können. Dies ist eine besonders kostengünstige und einfache Herstellweise des Halbzeugs.

Ebenfalls Gegenstand der vorliegenden Erfindung ist eine Vorbereitungsvorrichtung für die Vorbereitung eines Halbzeugs aus Fasermaterial auf ein Nasspressverfahren. Eine solche Vorbereitungsvorrichtung weist eine Vorbereitungsfläche für die Anordnung des Halbzeugs mit dessen Unterseite auf. Eine erfindungsgemäße Vorbereitungsvorrichtung zeichnet sich dadurch aus, dass die Vorbereitungsfläche eine Vielzahl von Saugöffnungen aufweist, welche zum Anlegen eines Unterdrucks an die Unterseite des Halbzeugs ausgebildet sind. Dabei kann z.B. eine Kompressorvorrichtung vorgesehen sein, welche in fluidkommunizierender Verbindung mit den Saugöffnungen steht. Hierfür kann die Vorbereitungsfläche entsprechende Fluidanschlüsse aufweisen. Eine erfindungsgemäße Vorbereitungsvorrichtung wird insbesondere für die Durchführung eines erfindungsgemäßen Verfahrens eingesetzt, so dass durch die erfindungsgemäße Vorbereitungsvorrichtung die gleichen Vorteile erzielt werden, wie sie ausführlich mit Bezug auf ein erfindungsgemäßes Verfahren erläutert worden sind.

Eine erfindungsgemäße Vorbereitungsvorrichtung lässt sich dahingehend weiterbilden, dass ein Wechseleinsatz und/oder eine Schablone für wenigstens einen Wechselabschnitt der Vorbereitungsfläche vorgesehen sind, welcher die Saugöffnungen des Wechselabschnitts abdeckt. Dabei können auch Kombinationen von Wechseleinsatz und Schablone verwendet werden. Hinsichtlich der Definitionen der Begrifflichkeiten "Wechseleinsatz" und "Schablone" wird auf die entsprechenden Absätze mit Bezug auf das Verfahren verwiesen. In beiden Fällen können Wechseleinsatz und/oder Schablone sowohl fluiddicht, als auch mit eigenen Wechselsaugöffnungen versehen sein. Selbstverständlich kann eine Fixierung des Wechseleinsatzes und/oder der Schablone über Fixiermittel vorgesehen sein, um während der Durchführung des Verfahrens eine definierte Positionierung beibehalten zu können. Insbesondere bei großer Stückzahl einer definierten Form des Halbzeugs sind solche Bauteile in Form von Wechseleinsatz und/oder Schablone von Vorteil, da die Geschwindigkeit beim Wechsel zwischen zwei Halbzeugen deutlich erhöht werden kann.

Ebenfalls vorteilhaft ist es, wenn bei einer erfindungsgemäßen Vorbereitungsvorrichtung der Wechseleinsatz und/oder die Schablone eigene Wechselsaugöffnungen aufweisen, die mit den Saugöffnungen der Vorbereitungsfläche fluidkommunizierend verbunden sind. Insbesondere können der Wechseleinsatz und/oder die Schablone ein Untervolumen über die Fläche aufweisen, so dass die fluidkommunizierende Verbindung besonders kostengünstig und einfach zur Verfügung gestellt wird. Damit können geschlossene und geöffnete Bereiche innerhalb des Wechseleinsatzes und/oder der Schablone einfach zur Verfügung gestellt werden. Die flächige Variation des Drucks bzw. eine vordefinierte Druckverteilung wird damit besonders kostengünstig und einfach an der Unterseite des Halbzeugs anlegbar.

Bei dem Vorsehen von Wechselsaugöffnungen kann es von Vorteil sein, dass bei einer erfindungsgemäßen Vorbereitungsvorrichtung die Saugöffnungen und/oder die Wechselsaugöffnungen gleichmäßig oder im Wesentlichen gleichmäßig verteilt sind. Diese gleichmäßige oder im Wesentlichen gleichmäßige Verteilung bringt eine kostengünstige und einfache Herstellung des jeweiligen Bauteils mit sich. Auch kann in gleichmäßiger Weise eine im Wesentlichen kontinuierliche Fluidfront beim Einbringen des Matrixwerkstoffs erzielt werden. Selbstverständlich können gleichmäßig verteilte Saugöffnungen mit ungleichmäßig verteilten Wechselsaugöffnungen und umgekehrt kombiniert werden.

Alternativ ist es auch möglich, wenn bei einer erfindungsgemäßen Vorbereitungsvorrichtung die Saugöffnungen und/oder die Wechselsaugöffnungen ungleichmäßig verteilt sind, um unterschiedliche Saugabschnitte auszubilden. Auf diese Weise sind Druckverteilungen möglich, welche sich zweidimensional erstrecken. Es kann also eine Anpassung an unterschiedlich dicke Bereiche des Halbzeugs erfolgen, so dass durch die Druckverteilung die Dickenverteilung wiedergespiegelt und damit eine entsprechend ausgebildete Fluidfront erzeugt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform einer erfindungsgemäßen Vorbereitungsvorrichtung,
- Fig. 2: die Ausführungsform der Fig. 1 mit aufgesetztem Halbzeug,

- Fig. 3: eine weitere Ausführungsform einer erfindungsgemäßen Vorbereitungsvorrichtung,
- Fig. 4: eine Ausführungsform einer erfindungsgemäßen Vorbereitungsvorrichtung mit Schablone,
- Fig. 5: eine Ausführungsform einer erfindungsgemäßen Vorbereitungsvorrichtung mit Wechseleinsatz und
- Fig. 6: die Ausführungsform der Fig. 5 zusätzlich mit einer Schablone.

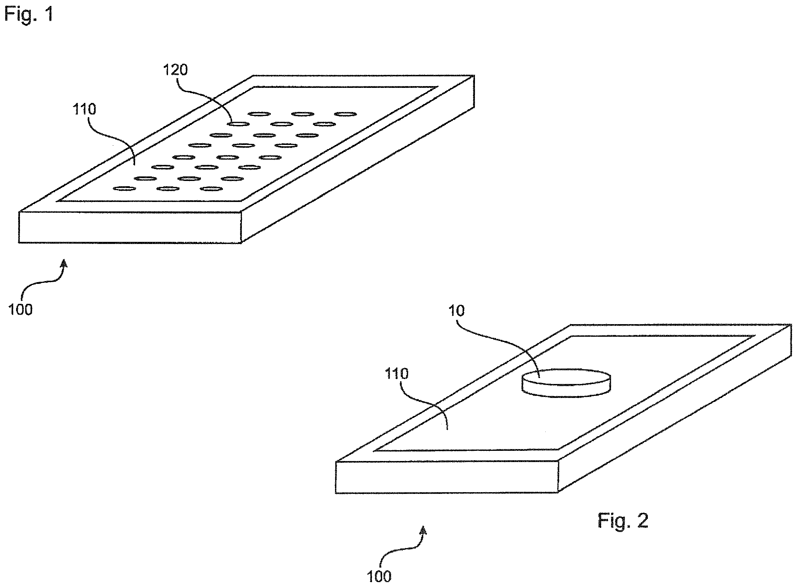

Die Fig. 1 und 2 zeigen eine erste Ausführungsform einer erfindungsgemäßen Vorbereitungsvorrichtung 100. Diese ist tischartig ausgebildet und weist auf der Oberfläche eine Vorbereitungsfläche 110 auf. Auf der Vorbereitungsfläche 110 schematisch dargestellt befinden sich eine Vielzahl von Saugöffnungen 120 in im Wesentlichen gleichmäßiger Verteilung. Der besseren Übersichtlichkeit geschuldet sind die Saugöffnungen 120 in Fig. 2 nicht mehr dargestellt. Auf dieser Vorbereitungsfläche 110 wird das Halbzeug 10 aus Fasermaterial angeordnet.

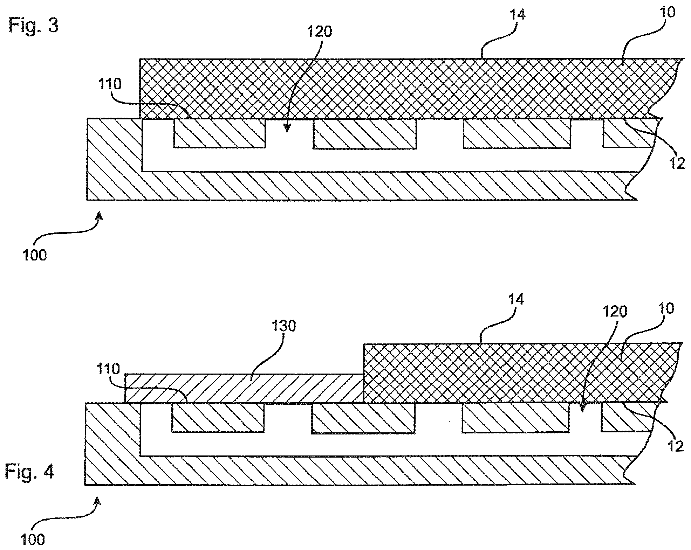

Fig. 3 zeigt eine weitere Ausführungsform einer erfindungsgemäßen Vorbereitungsvorrichtung 100 im Querschnitt. Nach oben ausgerichtet ist die Vorbereitungsfläche 110 zu erkennen. Auch ist ein Fluidkanal im Inneren der Vorbereitungsfläche 110 zu erkennen, welcher die einzelnen Saugöffnungen 120 miteinander verbindet und nach außen über einen Fluidanschluss (nicht dargestellt) zu einem Kompressor führt. Das Halbzeug 10 ist mit seiner Unterseite 12 auf die Vorbereitungsfläche 110 aufgelegt, so dass die Oberseite 14 nach oben zeigt. Wird nun ein Unterdruck angelegt, so wird über die Saugöffnungen 120 dieser Unterdruck auf die Unterseite 12 des Halbzeugs 10 einwirken. Ein auf der Oberseite 14 aufgebrachter Matrixwerkstoff 20 wird somit mit Unterstützung des Unterdrucks nach unten auf die Saugöffnungen 120 zu gezogen. Das Einbringen des fließfähigen Matrixwerkstoffs 20 ist also durch den Unterdruck unterstützt.

Für den Fall, dass das Halbzeug 10 eine geringere geometrische Erstreckung aufweist, als dies für die Vorbereitungsfläche 110 der Fall ist, können Schablonen 130 eingesetzt werden. Fig. 4 zeigt eine solche Schablone 130 in fluiddichter Form. Sie deckt diejenigen Saugöffnungen 120 ab, welche nicht vom Halbzeug 10 bedeckt sind. Damit wird der angelegte Unterdruck ausschließlich auf die Saugöffnungen 120 auf die Unterseite 12 des Halbzeugs 10 einwirken, an welchem das Halbzeug 10 sich auch befindet. Mit anderen Worten verhindert die Schablone 130 eine Leckage an den freiliegenden Saugöffnungen 120.

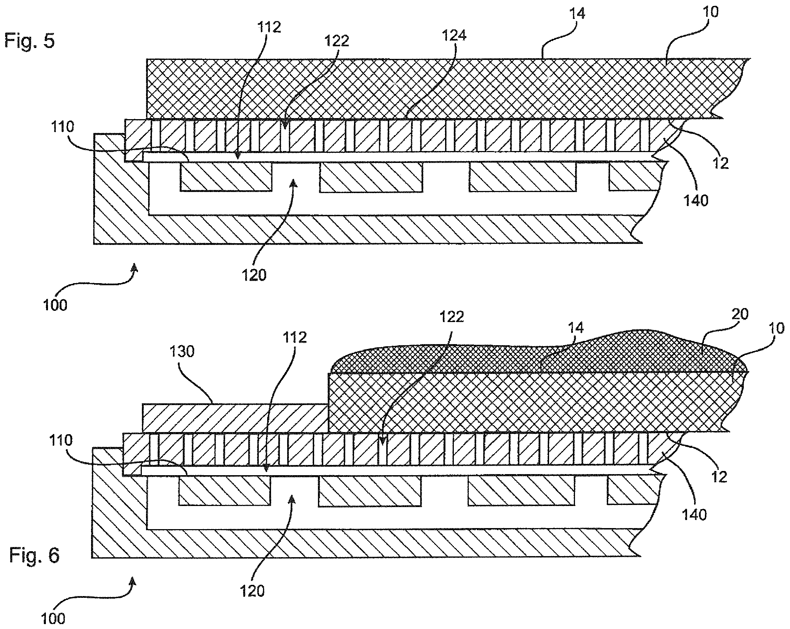

Fig. 5 zeigt eine Ausführungsform der Vorbereitungsvorrichtung 100 mit einem Wechseleinsatz 140. Dieser Wechseleinsatz'140 ist mit einer Vielzahl von Wechselsaugöffnungen 122 versehen. Diese sind wiederum mit einem Wechselabschnitt miteinander fluidkommunizierend verbunden, so dass dieser Hohlraum des Wechselabschnitts 112 auf die Vorbereitungsfläche 110 aufgelegt wird. Über die Saugöffnungen 120 erfolgt nun das Anlegen eines Unterdrucks, welcher sich wiederum über die Wechselsaugöffnungen 122 an der Unterseite 12 des Halbzeugs 10 auswirkt. Nun wird ebenfalls wieder der Matrixwerkstoff 20 (wie z.B. in Fig. 6 dargestellt) aufgebracht und mithilfe des Unterdrucks unterstützend in das Halbzeug 10 eingebracht.

Fig. 6 zeigt eine Möglichkeit einer Kombination aus einer Schablone 130 und einem Wechseleinsatz 140. Diese wirken dabei zusammen, so dass die Schablone 130 nun eine Leckage von ansonsten freiliegenden Wechselsaugöffnungen 122 verhindert.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Halbzeug
- 12: Unterseite
- 14: Oberseite
- 20: Matrixwerkstoff
- 100: Vorbereitungsvorrichtung
- 110: Vorbereitungsfläche
- 112: Wechselabschnitt
- 120: Saugöffnung
- 122: Wechselsaugöffnung
- 124: Saugabschnitte
- 130: Schablone
- 140: Wechseleinsatz

## Patentansprüche

1. Verfahren für die Vorbereitung eines Halbzeugs (10) aus Fasermaterial mit einer Oberseite (14) und einer Unterseite (12) auf ein Nasspressverfahren, aufweisend die folgenden Schritte:
- Anordnen eines Halbzeugs (10) aus Fasermaterial mit der Unterseite (12) dahin gehend auf einer Vorbereitungsfläche (110) mit einer Vielzahl von Saugöffnungen (120),
- Anlegen eines Unterdrucks an die Unterseite (12) des Halbzeugs (10) über die Saugöffnungen (120),
- Einbringen eines fließfähigen Matrixwerkstoffs (20) über die Oberseite (14) des Halbzeugs (10),
**dadurch gekennzeichnet, dass** auf der Vorbereitungsfläche (110) eine Schablone (130) angeordnet wird, welche abschnittsweise die Saugöffnungen (120) abdeckt, insbesondere mit der geometrischen Form des Halbzeugs (10) korrespondiert.

2. Verfahren nach einem der vorangegangenen Ansprüche, **dadurch gekennzeichnet, dass** vor dem Anordnen des Halbzeugs (10) auf der Vorbereitungsfläche (110) ein an das Halbzeug (10) angepasster Wechseleinsatz (140) auf der Vorbereitungsfläche (110) angeordnet wird.

3. Verfahren nach einem der vorangegangenen Ansprüche, **dadurch gekennzeichnet, dass** das Halbzeug (10) aus Fasermaterial als ein mehrlagiges Halbzeug (10), insbesondere mit mehr als 6 Lagen, ausgebildet ist.

4. Verfahren nach einem der vorangegangenen Ansprüche, **dadurch gekennzeichnet, dass** das Halbzeug (10) aus Fasermaterial die Fasern zumindest abschnittsweise in einer der folgenden Formen aufweist:
- Fasergelege
- Fasergewebe

5. Vorbereitungsvorrichtung (100) für die Vorbereitung eines Halbzeugs (10) aus Fasermaterial auf ein Nasspressverfahren, aufweisend eine Vorbereitungsfläche (110) für die Anordnung des Halbzeugs (10) mit dessen Unterseite (12), wobei die Vorbereitungsfläche (110) eine Vielzahl von Saugöffnungen (120) aufweist, welche zum Anlegen eines Unterdrucks an die Unterseite (12) des Halbzeugs (10) ausgebildet sind, **dadurch gekennzeichnet, dass** die Saugöffnungen (120) ungleichmäßig verteilt sind, um unterschiedliche Saugabschnitte (124) auszubilden.

6. Vorbereitungsvorrichtung (100) nach Anspruch 5, **dadurch gekennzeichnet, dass** ein Wechseleinsatz (140) und/oder eine Schablone (130) für wenigstens einen Wechselabschnitt (112) der Vorbereitungsfläche (110) vorgesehen ist, welcher die Saugöffnungen (120) des Wechselabschnitts (112) abdeckt.

7. Vorbereitungsvorrichtung (100) nach Anspruch 6, **dadurch gekennzeichnet, dass** der Wechseleinsatz (140) und/oder die Schablone (130) eigene Wechselsaugöffnungen (122) aufweisen, die mit den Saugöffnungen (120) der Vorbereitungsfläche (110) fluidkommunizierend verbunden sind.

8. Vorbereitungsvorrichtung (100) nach Anspruch 7, **dadurch gekennzeichnet, dass** die Wechselsaugöffnungen (122) ungleichmäßig verteilt sind, um unterschiedliche Saugabschnitte (124) auszubilden.

## Claims

1. A method for preparing a semi-finished product (10) made of fibre material having an upper side (14) and an underside (12) for a wet-pressing process, having the following steps:
- arranging a semi-finished product (10) made of fibre material with the underside (12) on a preparation surface (110) having a large number of suction openings (120),
- applying a partial vacuum to the underside (12) of the semi-finished product (10) via the suction openings (120),
- introducing a free-flowing matrix material (20) via the upper side (14) of the semi-finished product (10),
**characterised in that** a template (130) is arranged on the preparation surface (110), which template covers the suction openings (120) in portions, in particular corresponds with the geometric form of the semi-finished product (10).

2. A method according to one of the preceding claims, **characterised in that** prior to arranging the semi-finished product (10) on the preparation surface (110) an interchangeable insert (140) adapted to the semi-finished product (10) is arranged on the preparation surface (110).

3. A method according to one of the preceding claims, **characterised in that** the semi-finished product (10) made of fibre material is formed as a multilayer semi-finished product (10), in particular with more than 6 layers.

4. A method according to one of the preceding claims, **characterised in that** the semi-finished product (10) made of fibre material has the fibres at least in portions in one of the following forms:
- laid fibre fabric
- woven fibre fabric

5. A preparation device (100) for preparing a semi-finished product (10) made of fibre material for a wet-pressing process, having a preparation surface (110) for the arrangement of the semi-finished product (10) with the underside (12) thereof, wherein the preparation surface (110) has a large number of suction openings (120) which are designed to apply a partial vacuum to the underside (12) of the semi-finished product (10), **characterised in that** the suction openings (120) are unevenly distributed in order to form different suction portions (124).

6. A preparation device (100) according to Claim 5, **characterised in that** an interchangeable insert (140) and/or a template (130) is provided for at least one interchangeable portion (112) of the preparation surface (110) which covers the suction openings (120) of the interchangeable portion (112).

7. A preparation device (100) according to Claim 6, **characterised in that** the interchangeable insert (140) and/or the template (130) have their own interchangeable suction openings (122) which are fluidically connected to the suction openings (120) of the preparation surface (110).

8. A preparation device (100) according to Claim 7, **characterised in that** the interchangeable suction openings (122) are unevenly distributed in order to form different suction portions (124).

## Revendications

1. Procédé de préparation d'un produit semi-fini (10) en un matériau à base fibres comportant une face supérieure (14) et une face inférieure (12) par un procédé de pressage par voie humide, comprenant les étapes suivantes, consistant à :
- positionner un produit semi fini (10) en un matériau à base de fibres de sorte que sa face inférieure (12) soit appliquée sur une surface de préparation (110) ayant un ensemble d'ouvertures d'aspiration (120),
- établir une dépression sur la face inférieure (12) du produit semi fini (10) par les ouvertures d'aspiration (120),
- introduire un matériau formant matrice fluide (20) sur la face supérieure (14) du produit semi fini (10),
**caractérisé en ce que**
sur la surface de préparation (110) est appliqué un gabarit (130) qui recouvre par segments les ouvertures d'aspiration (120), et en particulier correspond à la forme géométrique du produit semi fini (10).

2. Procédé conforme à la revendication précédente, **caractérisé en ce qu'**
avant le positionnement du produit semi fini (10) sur la surface de préparation (110) un insert interchangeable (140) adapté à ce produit semi fini est positionné sur la surface de préparation (110).

3. Procédé conforme à l'une des revendications précédentes, **caractérisé en ce que**
le produit semi fini (10) en un matériau à base de fibres est réalisé sous la forme d'un produit semi fini stratifié (10), comportant en particulier plus de six couches.

4. Procédé conforme à l'une des revendications précédentes, **caractérisé en ce que**
le produit semi fini (10) en un matériau à base de fibres renferme les fibres au moins par segments sous l'une des formes suivantes :
- nappe de fibres,
- tissu de fibres.

5. Dispositif de préparation (100) par procédé de pressage par voie humide, d'un produit semi fini (10) en un matériau à base de fibres comprenant une surface de préparation (110) destinée au positionnement du produit semi fini (10) par sa face inférieure (12), la surface de préparation (110) comprenant un ensemble d'ouvertures d'aspiration (120) qui sont réalisées pour permettre l'application d'une dépression sur la face interne (12) du produit semi fini (10),
**caractérisé en ce que**
les ouvertures d'aspiration (120) sont réparties de façon non uniforme pour former différents segments d'aspiration (124).

6. Dispositif de préparation (100) conforme à la revendication 5, **caractérisé en ce qu'**
il est prévu un insert interchangeable (140) et/ou un gabarit (130) pour au moins un segment interchangeable (112) de la surface de préparation (110), qui recouvre les ouvertures d'aspiration (120) du segment interchangeable (112).

7. Dispositif de préparation conforme à la revendication 6,
**caractérisé en ce que**
l'insert interchangeable (140) et/ou le gabarit (130) comporte(nt) des ouvertures d'aspiration interchangeables (122) propres qui sont en communication fluidique avec les ouvertures d'aspiration (120) de la surface de préparation (110).

8. Dispositif de préparation (100) conforme à la revendication 7, **caractérisé en ce que**
les ouvertures d'aspiration interchangeables (122) sont réparties de façon non uniforme pour former différents segments d'aspiration (124).
